# EUROPÄISCHE PATENTSCHRIFT

(11) **EP 1 602 270 B1**
(45) Veröffentlichungstag und Bekanntmachung des Hinweises auf die Patenterteilung: **19.11.2008**
(21) Anmeldenummer: 05011820.7
(22) Anmeldetag: 01.06.2005
(51) Int. Cl.: A01F 15/07

(54) **Rundballenpresse für landwirtschaftliche Halmgüter**
Rotobaler for agricultural products
Presse à balles rondes pour des produits agricoles

(30) Priorität: 04.06.2004 DE 102004027308
(43) Veröffentlichungstag der Anmeldung: 07.12.2005
(73) Patentinhaber: Welger Maschinenfabrik GmbH, 38304 Wolfenbüttel (DE)
(72) Erfinder: Keune, Tobias, 38315 Werlaburgdorf (DE)

(56) Entgegenhaltungen:
- EP-A- 1 121 850
- US-A- 4 956 959
- US-A- 5 433 059
- US-A- 5 996 307
- US-B1- 6 272 816

## Beschreibung

Die Erfindung betrifft eine Rundballenpresse für landwirtschaftliche Halmgüter nach dem Oberbegriff des Patentanspruches 1.

Die Umhüllung von Rundballen mit einer Netzmaterialbahn hat sich wegen der Zeitersparnis und anderer Vorteile weitgehend durchgesetzt. Die Materialbahnweiterentwicklung zielt auf größere Lauflängen, d.h. 3000 m und mehr pro Rolle und größere Bahnbreiten, z. B. 140 cm, um eine bessere Umhüllung der Stirnseitenkanten des Rundballens zu erreichen. Dadurch steigt das Rollengewicht auf 50 bis 60 kg und mehr an.

Bei bekannten Rundballenpressen ist die Netzumhüllvorrichtung entweder an dem aufklappbaren Hintergehäuse angeordnet, was für das Einlegen der Materialbahnrolle relativ günstig ist, oder die Netzumhüllvorrichtung ist oberhalb der Deichsel am gestellfesten Vordergehäuse angeordnet. Im letzteren Falle ist die manuelle Handhabung sehr erschwert und teilweise gefährlich, weil die Materialbahnrolle in relativ hoher Position in die Abroll- oder Vorratsstation einzulegen ist.

Bei einer vorbekannten Ausführungsform einer Rundballenpresse mit am Vordergehäuse angeordneter Netzumhüllvorrichtung, siehe Prospekt John Deere Festkammerpressen 568 und 578" mit dem Druckvermerk 10/01, d.h. Oktober 2001, ist zum seitlichen Einschieben der Materialbahnrolle in die Abrollstation ein kurzes ortsfestes Schurrenblech nach Art einer schiefen Ebene vorgesehen. Nachteilig ist neben dem hohen Kraftaufwand zum Hochschieben vor allem die hohe Kippkante am Ende des Schurrenbleches, über die die Materialbahnrolle in die Abrollstation fallen soll. Zumindest für kleinere Bedienpersonen funktioniert diese Lösung nicht. Die Netzrolle ist auf halber Höhe festzuklemmen und dann nach dem Aufsteigen auf die Wartungsplattform durch den Bediener von Hand hochzuziehen und in die Abrollstation zu legen. Eine Vorratsrolle lagert in einem rohrförmigen Container unterhalb der Umhüllvorrichtung. Diese Handhabung ist wegen der vielen Arbeitsschritte zeitintensiv.

Ferner offenbart die DE 19711 164 A1 eine schurrenartige Ladeeinrichtung zum seitlichen Einschieben einer Materialbahnrolle in die Abrollstation einer Rundballenpresse. Die Ladeeinrichtung befindet sich in einer verriegelbaren Ruheposition parallel zu einer Pressenseitenwand und zur Horizontalen geneigt unter einer Pressenverkleidung. Die Ladeeinrichtung ist um eine vertikale Achse um 90° in eine Übergabeposition verschwenkbar, in der diese mit der Seitenwand einen rechten Winkel einschließt. Nachteilig ist, dass die schwere Materialbahnrolle erst mit der Ladeeinrichtung angehoben werden muss und erst dann in relativ großer Höhe von Hand von der Ladeeinrichtung abgeschoben und in die Abrollstation eingeschoben werden muss.

In der DE 100 04 563 A1 und der DE 100 04 564 A1 sind Rundballenpressen mit verbesserten Lade-/Transporteinrichtungen dargestellt und beschrieben, mit denen eine Materialbahnrolle kraftbeaufschlagt in die Vorratsstation bringbar ist, jedoch besteht weiterhin der Nachteil, dass die schwere Materialbahnrolle manuell aus der Vorratsstation in die Abrollstation zu überführen ist.

Bei einer weiteren bekannten Rundballenpresse (EP 109 93 66 A1) sind zwei Netzmaterialbahnrollen in einem Aufnahmebehälter übereinander angeordnet, welcher am Hintergehäuse der Rundballenpresse in günstiger Höhe angeordnet ist. Die obere Materialbahnrolle ist auf einem muldenförmigen, fest im Aufnahmebehälter angeordneten Boden angeordnet, während die untere Materialbahnrolle in der Abrollstation auf einer der beiden Einzugswalzen einer Netzumhülleinrichtung aufliegt. Bei leerer unterer Materialbahnrolle muss erst der Aufnahmebehälter nach oben um eine horizontale Achse geklappt werden, dann die obere Materialbahnrolle von Hand entnommen und auf einen in eine etwa horizontale Lage ausgeschwenkten Ladebügel gelegt werden. Nach Entnahme der leeren Materialbahnrolle wird die volle Materialbahnrolle durch Hochschwenken des Ladebügels in die Abrollstation gebracht und der Behälter geschlossen. Der Ladebügel bleibt in seiner Ladeposition und kann keine Vorratsrolle tragen. Für eine Anbringung am Vordergehäuse ist diese Anordnung mit übereinander angeordneten Rollen ungeeignet und benötigt auch mehrere Arbeitsvorgänge.

Eine ähnliche Einrichtung ist der EP 108 06 28 A1 entnehmbar. Hier sind zwei Materialbahnrollen auf Tragachsen übereinander in einem um eine vertikale Achse schwenkbaren Aufnahmebehälter angeordnet. Die Beschickung der unten gelegenen Abrollstation erfolgt durch Entnahme der oberen Materialbahnrolle aus Langlochführungen im Aufnahmebehälter und Einführung in die tiefergelegenen Langlochführungen der Abrollstation. Nachteilig auch hier der manuelle Kraftaufwand und die zahlreichen Arbeitsvorgänge.

Zwei übereinander an dem Hintergehäuse einer Rundballenpresse angeordnete Materialbahnrollenstationen sind auch in der EP 0935 915 B1 offenbart. Hierbei ist eine passive Vorratsrolle oberhalb der aktiven Materialbahnrolle angeordnet. Nach Aufbrauch der aktiven Materialbahnrolle soll die Vorratsrolle nach unten in die Abrollstation abgesenkt werden. Hierzu sind aufwendige Stützmechanismen notwendig. Nachteilig ist vor allem auch hier, dass die Vorratsrolle zunächst in eine hochgelegene Position gebracht werden muss, wodurch diese Einrichtung für eine Anbringung am Vordergehäuse ungeeignet ist. Außerdem verkantet die Vorratsrolle beim einseitigen Absenken.

Schließlich ist in der DE 92 11 541.1 U1 eine Rundballenpresse mit zwei übereinander angeordneten Materialbahnrollen dargestellt und beschrieben. Die obere ist achslos in einem Rohr untergebracht, die untere auf einer durchgehenden Drehachse gelagert. Zum Wechsel der unteren (leeren) Materialbahnrolle gegen die obere volle Materialbahnrolle ist zunächst die untere nach Entriegelung zu entnehmen, die obere herauszuziehen und auf die Drehhalterung zu schieben, die anschließend zu verriegeln ist.

Der Erfindung liegt die Aufgabe zugrunde, die bekannte Ladeeinrichtung zu bessern. Insbesondere soll das Einlegen einer Materialbahnrolle in eine Vorratsstation und das Umladen einer Materialbahnrolle von der Vorratsstation in die Abrollstation erheblich vereinfacht werden.

Diese Aufgabe wird erfindungsgemäß durch die Merkmale im Kennzeichnungsteil des Patentanspruches 1 gelöst. Vorteilhafte Weiterbildungen ergeben sich aus den Ansprüchen 2 bis 10.

Die erfindungsgemäße Ladeeinrichtung zeichnet sich durch eine Reihe erheblicher Vorteile aus gegenüber allen bisher bekannten Ladeeinrichtungen:
- Die Vorratsstation kann in niedriger Höhe bediengerecht am Vordergehäuse der Rundballenpresse oberhalb der Deichsel plaziert werden, so dass diese auch von kleineren Personen bequem mit einer Materialbahnrolle leicht beschickbar ist.
- Die in der Vorratsstation in der Rinne befindliche Materialbahnrolle kann aus einer niedrig gelegenen Position mit nur einer einzigen Schwenkbewegung in die höher gelegene Abrollstation gekippt werden. Ein Unfallrisiko für den Bediener entfällt.
- Die Ladeeinrichtung dient nicht nur zum Beschicken der Abrollstation, sondern auch als Vorratsstation für die Lagerung einer Materialbahnrolle.
- Die Ladeeinrichtung eignet sich sowohl für achslos in der Abrollstation gelagerte Materialbahnrollen als auch für auf einer Drehachse in der Abrollstation gelagerte Materialbahnrollen.
- Die erfindungsgemäße Ladeeinrichtung ist konstruktiv günstig für eine Automatisierung des Wechselvorganges der Materialbahnrollen, weil sie nur eine Stelleinrichtung für die Schwenkbewegung und gegebenenfalls eine Stelleinrichtung für die Aufnahmeeinrichtung des im Falle einer auf einer Achse gelagerten Materialbahnrolle benötigt.
- Es entfallen jegliche Montage- und Demontageschritte.
- Es resultiert eine wesentliche Zeitersparnis.

In weiterer Ausgestaltung ist vorgesehen, dass die Schwenkachse oder eine dazu parallele Achse als Kippkante dient, über die die Materialbahnrolle aus der Vorratsstation in die Abrollstation kippbar ist. Trotz niedrig gelegener Abrollstation ist auf diese Art und Weise ein kurzer Schwenkweg und ein schneller Beschickvorgang gewährleistet.

Ein problemloses Einschieben der Materialbahnrolle in die Vorratsstation wird dann erreicht, wenn die Einschiebeöffnung kreisringförmig oder wenigstens halbkreisförmig gestaltet ist und einen Radius aufweist, der größer ist als der maximale Radius einer Materialbahnrolle.

Dadurch wird die Materialbahnrolle nicht nur abgestützt, sondern auch geführt und ausgerichtet und muss nicht exakt fluchtend zur Rinne eingeführt werden.

Anspruch 10 schlägt eine besonders bedienerfreundliche Ausführung vor, die dadurch gekennzeichnet ist, dass die Steuerung der Ladeeinrichtung und/oder der Verstelleinrichtung mittels einer manuellen oder sensorischen Signalgebereinheit erfolgt. Dadurch ist eine Fernbetätigung per Knopfdruck oder eine automatische Auslösung, z. B. in Abhängigkeit von dem Materialbahnvorrat, möglich.

Zur weiteren Erläuterung der Erfindung wird auf die Zeichnungen und auf die nachfolgende Beschreibung verwiesen. In den Zeichnungen zeigen:
- Fig. 1: eine schematische Seitenansicht einer Rundballenpresse mit einer erfindungsgemäßen Ladeeinrichtung,
- Fig. 2: eine perspektivische Teildarstellung der Ladeeinrichtung und der Abrollstation ohne Materialbahnrollen und
- Fig. 3: in Seitenansicht die Ladeeinrichtung mit einer eingeschobenen Materialbahnrolle während des Kippvorganges in die Abrollstation.

Die Rundballenpresse hat ein allgemein mit 1 beziffertes Fahrgestell mit Rädern 2, welches über eine Zugdeichsel 3 an einen nicht dargestellten Schlepper anzuhängen ist. Den Rädern 2 ist in durch Pfeil 4 gekennzeichnete Arbeitsrichtung der Rundballenpresse eine mit 5 bezifferte Aufnahmevorrichtung (Pick-up) üblicher Bauart vorgeordnet. Auf dem Fahrgestell 1 ist ein allgemein mit 6 beziffertes Pressengehäuse angeordnet, bestehend aus einem gestellfesten Vordergehäuse 7 mit vorderen Seitenwänden 8 und einem gelenkig mit dem Vordergehäuse 7 verbundenen Hintergehäuse 9, welches nach Formung eines Ballens um eine obere Schwenkachse 10 zum Ballenausstoß aufklappbar ist.

Zwischen sich gegenüberliegenden, einander entsprechenden Seitenwänden 8 erstrecken sich Presselemente in Form von Presswalzen 11, die umfangsseitig einen Pressraum 12 begrenzen. Es können aber auch Riemen, Stabförderketten oder Kombinationen davon sein. Desgleichen kann der Pressraum 12 einer Bauart mit konstantem oder variablem Pressraumdurchmesser sein. Der Antrieb der Presselemente erfolgt durch eine nicht dargestellte, mit einem Hauptgetriebe gekoppelte Gelenkwelle vom Schlepper aus.

Oberhalb der drei Presswalzen 13 ist eine Umhüllvorrichtung 14 vorgesehen, mittels welcher eine nicht dargestellte Materialbahn, wie beispielsweise Netz oder Folie durch einen Spalt 1 5 zwischen zwei Presswalzen dem Pressraum 12 zuführbar ist, um einen fertig gepressten Ballen formfixierend zu umhüllen. Die Materialbahn wird in einer Abrollstation 16 von einer Materialbahnrolle 17 abgezogen. Bekannte Abrollstationen weisen entweder achslos in einem Aufnahmebehälter oder um eine horizontale, parallel zur Mittelachse 18 des Pressraumes 12 angeordnete Drehachse 19 drehbar gelagerte Materialbahnrollen 17 auf. Die Umhüllvorrichtung 14 weist darüber hinaus eine an sich bekannte Materialbahnrollenbremse, eine Abzugseinrichtung und eine Trenneinrichtung für die Materialbahn auf, die nicht dargestellt sind.

Neu ist eine Ladeeinrichtung 20, die einerseits eine Vorratsstation 21 für wenigstens eine Materialbahnrolle 22 bildet, und mittels welcher eine Materialbahnrolle 22 aus der Vorratsstation 21 in die Abrollstation 16 überführbar ist, wenn eine in der Abrollstation 16 befindliche Materialbahnrolle 17 beispielsweise leer ist, wenn eine Materialbahnrolle mit anderem Umhüllmaterial, z.B. Folie statt Netz verwendet werden soll oder zum erstmaligen Behüllen der Abrollstation 16.

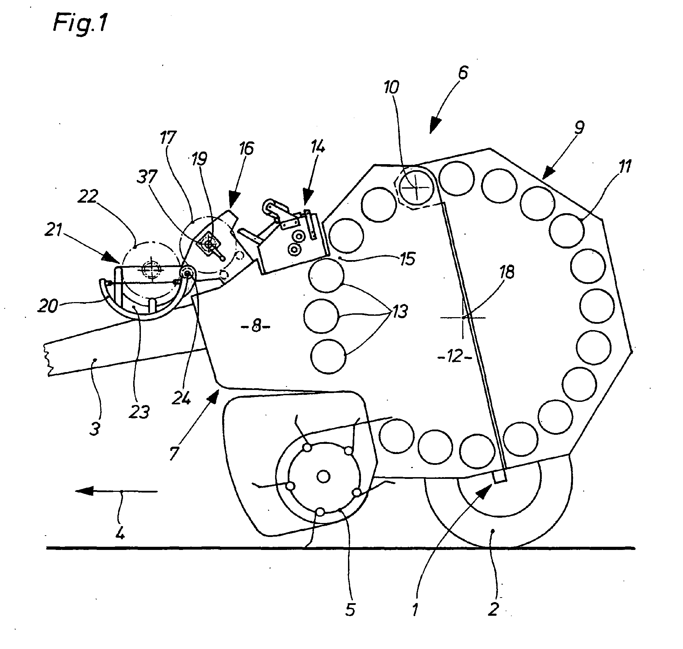

Wie am besten aus Figur 1 ersichtlich, ist die Ladeeinrichtung 20 der Abrollstation 16 in Arbeitsrichtung 4 der Rundballenpresse vorgelagert und relativ zur Abrollstation 16 etwa um einen Materialbahnrollenradius (größter Durchmesser) tiefer gelagert.

Die Ladeeinrichtung 20 besteht aus einer Rinne oder einem Tragrost als Tragelement für wenigstens eine Materialbahnrolle 22 und hat wenigstens eine seitliche Öffnung 23 zum einfachen Einlegen der Materialbahnrolle 22. Darüber hinaus ist die Ladeeinrichtung 20 zum einfachen Umladen der Materialbahnrolle 22 von der Vorratsstation 21 in die Abrollstation 16 um eine Schwenkachse 24 schwenkbar gelagert, die parallel zur Rotationsachse 19 einer Materialbahnrolle 17 in der Abrollstation 16 angeordnet ist.

Die Ladeeinrichtung 20 wird von zwei Querrohren 25,26 gebildet, die zusammen mit einem dritten, an Seitenwänden 28,29 der Abrollstation 16 befestigten Querrohr 27 das Tragelement bilden, das die Materialbahnrolle 22 in deren unterer Hälfte trägt und hält.
In axialer Richtung wird die Ladeeinrichtung 20 auf der geschlossenen Seite durch eine halbkreisähnliche Stirnplatte 30 begrenzt, an der die Querrohre 25,26 in rechtem Winkel angeschweißt sind. Auf der offenen Seite der Ladeeinrichtung 20 sind die Querrohre 25,26 etwa im Abstand von zwei Drittel ihrer Länge zur Stirnplatte 30 nach unten abgewinkelt ausgeführt und an einen halbkreisförmigen Rohrbogen 31 angeschweißt, dessen Radius größer ist als der maximale Durchmesser der Materialbahnrolle 22, so dass die Materialbahnrolle 22 auch in nach unten zur Horizontalen geneigter Position leicht einschiebbar ist. Die Stirnplatte 30 und der Rohrbogen 31 weisen jeweils eine Lasche 32 auf, die auf an den Seitenwänden 28,29 der Abrollstation 16 befestigten Zapfen 33 verschwenkbar gelagert sind. Die Schwenkbewegung der Ladeeinrichtung 20 nach unten ist durch einen Anschlag 34 an der Seitenwand 29 der Abrollstation 16 begrenzt, der mit der Lasche 32 zusammenwirkt. Das an den Seitenwänden 28,29 der Abrollstation 16 befestigte Querrohr 27 ist über seine ganze Länge parallel zur Rotationsachse 19 angeordnet und dient als Kippkante 35, über die die Materialbahnrolle 22 aus der Vorratsstation 21 in die Abrollstation 16 kippbar ist. An den oberen Enden greift ein Sicherungselement 36 an, z.B. Halteseil, das eine auf der Ladeeinrichtung 20 befindliche Vorrats- Materialbahnrolle 22 gegen seitliches Herausrutschen sichern soll.

Die Abrollstation 16 ist in diesem Ausführungsbeispiel nicht in achsloser Bauart, sondern in Drehachsen- Bauart ausgeführt. Eine Materialbahnrollenhalterung 37 wird von zwei sich in einem Abstand koaxial gegenüberliegenden Aufnahmezapfen 38,39 gebildet, die die Rotationsachse 19 für eine Materialbahnrolle 17 bilden. Der axiale Abstand zwischen den Aufnahmezapfen 38,39 ist durch eine Schraubspindel 40 veränderbar zwischen einem Maß, das größer ist als die Breite der Materialbahnrollenspule, z.B. Papprolle 41, so dass diese zwischen den Aufnahmezapfen 38,39 einlegbar ist und zwischen einem weiteren Maß, das kleiner ist als die Breite der Papprolle 41, so dass die Aufnahmezapfen 38,39 die Materialbahnrolle 17 zwischen sich festklemmen.

Jeder Aufnahmezapfen 38,39 ist drehbar in einer Seitenwand 28,29 der Abrollstation 16 gelagert. Der axial verstellbare Aufnahmezapfen 39 hat einen konischen Abschnitt , dessen großer Durchmesser größer ist als der Innendurchmesser der Papprolle 41. Der andere Aufnahmezapfen 38 ist nicht axial verstellbar, sondern weist ein pyramidenähnliches Mitnehmerkreuz 42 auf, das von vier in Umfangsrichtung gleichmäßig gegeneinander versetzten, dreieckförmigen Mitnehmern 43 gebildet wird, wobei jeweils eine Kathetenseite an einer Drehscheibe 44 befestigt ist, während die Hypotenusenenden drehscheibenseitig einen Hüllkreis bilden, der größer ist als der Innendurchmesser der Papprolle 41 während die anderen zur Rotationsachse 19 zusammenlaufenden Hypotenusenenden an einer Spitze zusammenlaufen und eine Art Aufnahmekonus bilden. Die Hypotenusen selbst greifen formschlüssig in die Papprolle 41 ein, sobald der axiale Druck durch Betätigung der Schraubspindel 40 ansteigt. Die Lagerachse dieses Aufnahmezapfens 38 ist durch die Seitenwand 28 durchgeführt und drehfest mit einer nicht dargestellten, an sich bekannten Bremseinrichtung verbunden, um die Materialbahnrolle beim Abzug der Umhüllmaterialbahn abzubremsen.

Die Abrollstation 16 weist darüber hinaus an der Unterseite ein Bodenelement auf, das von zwei sich parallel zur Rotationsachse erstreckenden Querrohren 45 gebildet wird, die an den Seitenwänden befestigt sind. Der gegenseitige Abstand ist kleiner als der Materialbahnrollendurchmesser, während der Abstand zur Rotationsachse 19 etwas größer ist als der maximale Materialbahnrollendurchmesser, so dass eine darauf befindliche Materialbahnrolle 22 bzw. deren Papprolle 41 sich im Wirkbereich der Aufnahmezapfen 38,39 befindet.

### Die Arbeitsweise der erfindungsgemäßen Vorrichtung ist wie folgt:

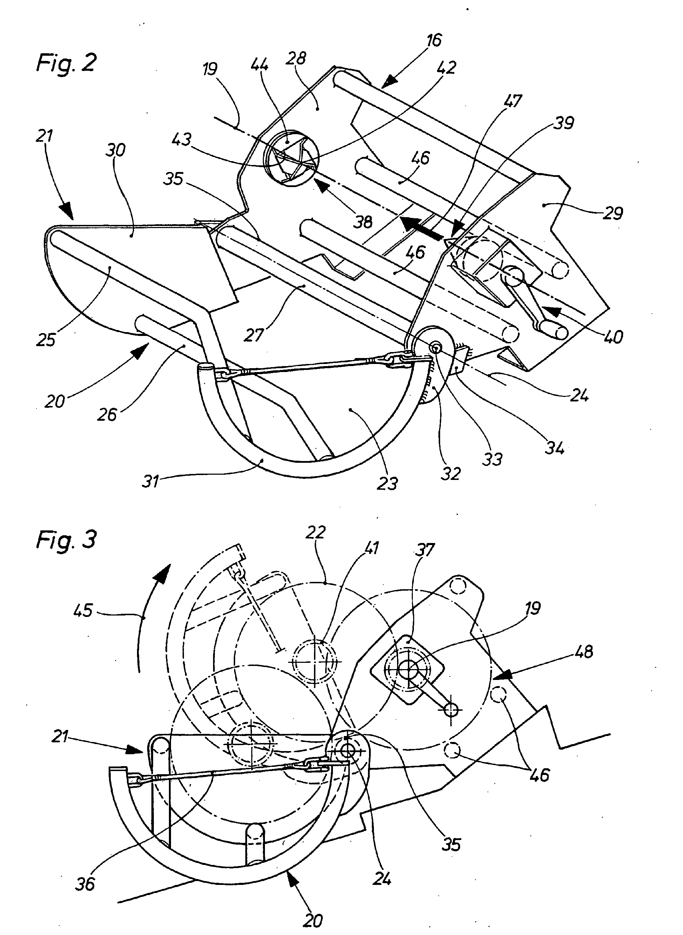

Befindet sich weder in der Abroll -16 noch in der Vorratstation 21 eine Materialbahnrolle, siehe Fig.2, so legt man die eine Seite einer Materialbahnrolle auf den Rohrbogen 31 auf und schiebt diese bis zum Anschlag an die Stirnplatte 30. Die Überladung einer Materialbahnrolle 22, siehe Fig.3 erfolgt dann manuell durch Angriff am Rohrbogen 31 oder mittels eines Hilfsantriebes fremdkraftunterstützt dadurch, dass die Ladeeinrichtung 20 um die Schwenkachse 24 soweit in Richtung des Pfeiles 45 verschwenkt wird, bis der Schwerpunkt der Materialbahnrolle 22 die Schwenkachse 24 überschreitet, wodurch die Materialbahnrolle 22 dann selbsttätig unter Schwerkraftwirkung auf die Querrohre 46 fällt in eine nicht gezeichnete Zwischenposition. Danach wird die Ladeeinrichtung 20 wieder zurück in ihre in Volllinie gezeigte Beschickungsposition geschwenkt. Durch axiales Verschieben des Aufnahmezapfens 39 in Richtung des Pfeiles 47 wird der Rollenkern, z. B. die Papprolle 41, gegen das Mitnehmerkreuz 42 gedrückt, dabei die Materialbahnrolle 22 zentriert und in die in Fig.3 gezeichnete Arbeitsposition 48 angehoben, in der sie um die Rotationsachse 19 drehbar ist. Die Mitnehmer 43 schneiden in die Papprolle 41 ein, so dass die Materialbahnrolle 22 formschlüssig mit dem Aufnahmezapfen 38 verbunden ist. Eine zweite Materialbahnrolle wird in die Ladeeinrichtung 20 als Vorrat eingeschoben, die bei Bedarf schnell und einfach in die Abrollstation 16 überladbar ist. Nach Einfädeln des Rollenanfanges in die Umhüllvorrichtung 14 und Befestigung des Halteseils 36 kann der Umhüllvorgang beginnen. Zur weiteren Automatisierung können die Ladeeinrichtung 20 und der axial verstellbare Aufnahmezapfen 39 fremdkraftbetätigbar sein per Knopfdruck oder durch Sensorsignal in Abhängigkeit vom Materialbahnvorrat.

## Patentansprüche

1. Rundballenpresse für landwirtschaftliche Halmgüter mit einer Abrollstation (16) für eine Materialbahnrolle (17) und einer Vorratsstation (21) für wenigstens eine Materialbahnrolle (22), wobei eine Ladeeinrichtung (20) vorgesehen ist zum Überführen einer Materialbahnrolle (22) aus der Vorratsstation (21) in die Abrollstation (16), **dadurch gekennzeichnet, dass** die Ladeeinrichtung (20) um eine zur Rotationsachse (19) der in der Abrollstation (16) befindlichen Materialbahnrolle (16) parallel angeordnete Schwenkachse (24) schwenkbar ist und wenigstens eine stirnseitige Einschiebeöffnung (23) für die Materialbahnrolle (16,22) aufweist.

2. Rundballenpresse nach Anspruch 1, **dadurch gekennzeichnet, dass** die Schwenkachse (24) oder eine dazu parallele Achse als Kippkante (35) dient, über die die Materialbahnrolle (22) aus der Vorratsstation (21) in die Abrollstation (16) kippbar ist.

3. Rundballenpresse nach Anspruch 1 oder 2, **dadurch gekennzeichnet, dass** die Ladeeinrichtung (20) ein Tragelement für wenigstens eine Materialbahnrolle (22) umfasst, dessen Querschnitt sich zur Einschiebeöffnung (23) hin erweitert.

4. Rundballenpresse nach einem der Ansprüche 1 bis 3, **dadurch gekennzeichnet, dass** die Einschiebeöffnung (23) kreisringförmig oder wenigstens halbkreisförmig gestaltet ist und einen Radius aufweist, der größer ist als der maximale Radius einer Materialbahnrolle (22).

5. Rundballenpresse nach Ansprüche 3 und 4, **dadurch gekennzeichnet, dass** das Tragelement aus in Umfangsrichtung mit Abstand versetzten Rohren (25,26) besteht, die zur Einschiebeöffnung (23) hin abgewinkelt oder gebogen ausgeführt sind entsprechend dem größeren Radius der Einschiebeöffnung (23).

6. Rundballenpresse nach einem oder mehreren der vorhergehenden Ansprüche, **dadurch gekennzeichnet, dass** die Abrollstation (16) eine Materialbahnroltenhalterung (37) aufweist mit zwei voneinander beabstandeten, koaxial gelagerten Aufnahmeelementen (38,39) für eine Materialbahnrolle (16).

7. Rundballenpresse nach Anspruch 6, **dadurch gekennzeichnet, dass** der axiale Abstand der Aufnahmeelemente (38,39) mittels einer Verstelleinrichtung (40) veränderbar ist zum Zentrieren und lösbaren Festklemmen der Materialbahnrolle (16).

8. Rundballenpresse nach Anspruch 7, **dadurch gekennzeichnet, dass** wenigstens ein Aufnahmeelement (38) drehfest mit einer Materialbahnrolle (16) zwecks Übertragung einer Bremskraft verbindbar ist.

9. Rundballenpresse nach Anspruch 7 und einem oder mehreren der vorhergehenden Ansprüche, **dadurch gekennzeichnet, dass** die Ladeeinrichtung (20) und/oder die Verstelleinrichtung (40) manuell oder fremdkraftbetätigbar sind/ist.

10. Rundballenpresse nach einem oder mehreren der vorhergehenden Ansprüche, **dadurch gekennzeichnet, dass** die Steuerung der Ladeeinrichtung (20) und/oder der Verstelleinrichtung (40) mittels einer manuellen oder sensorischen Signalgebereinheit erfolgt.

## Claims

1. A round baler for agricultural stalk material with an unrolling station (16) for a roll of material web (17) and a supply station (21) for at least one roll of material web (22), with a loading means (20) being provided for transferring a roll of material web (22) from the supply station (21) into the unrolling station (16), **characterised in that** the loading means (20) is pivotable about a pivot axis (24) arranged parallel to the axis of rotation (19) of the roll of material web (16) located in the unrolling station (16) and has at least one end-face insertion opening (23) for the roll of material web (16, 22).

2. A round baler according to Claim 1, **characterised in that** the pivot axis (24) or an axis parallel thereto serves as tilting edge (35), via which the roll of material web (22) can be tilted out of the supply station (21) into the unrolling station (16).

3. A round baler according to Claim 1 or 2, **characterised in that** the loading means (20) comprises a supporting element for at least one roll of material web (22), the cross-section of which widens towards the insertion opening (23).

4. A round baler according to one of Claims 1 to 3, **characterised in that** the insertion opening (23) is in the form of a circular ring or is at least semicircular and has a radius which is greater than the maximum radius of a roll of material web (22).

5. A round baler according to Claims 3 and 4, **characterised in that** the supporting element consists of tubes (25, 26) offset spaced apart in the peripheral direction, which are angled or curved towards the insertion opening (23) corresponding to the larger radius of the insertion opening (23).

6. A round baler according to one or more of the preceding claims, **characterised in that** the unrolling station (16) has a holder (37) for a roll of material web, with two spaced-apart, coaxially mounted receiving elements (38, 39) for a roll of material web (16).

7. A round baler according to Claim 6, **characterised in that** the axial distance between the receiving elements (38, 39) can be altered by means of an adjustment means (40) to centre and detachably clamp the roll of material web (16).

8. A round baler according to Claim 7, **characterised in that** at least one receiving element (38) can be connected in a manner resistant to rotation to a roll of material web (16) for transmitting a braking force.

9. A round baler according to Claim 7 and one or more of the preceding claims, **characterised in that** the loading means (20) and/or the adjustment means (40) can be actuated manually or by external force.

10. A round baler according to one or more of the preceding claims, **characterised in that** the loading means (20) and/or the adjustment means (40) is controlled by means of a manual or sensor-based signal generator unit.

## Revendications

1. Presse à balles rondes pour des produits agricoles avec un poste de déroulement (16) pour un rouleau de bande de matière (17) et un poste de stockage (21) pour au moins un rouleau de bande de matière (22), un dispositif de chargement (20) étant prévu pour le transport d'un rouleau de bande de matière (22) du poste de stockage (21) au poste de déroulement (16), **caractérisée en ce que** le dispositif de chargement (20) peut être pivoté autour d'un axe de pivotement (24) disposé parallèlement à l'axe de rotation (19) du rouleau de bande de matière (16) se trouvant dans le poste de déroulement (16) et présente au moins une ouverture d'introduction (23) côté frontal pour le rouleau de bande de matière (16, 22).

2. Presse à balles rondes selon la revendication 1, **caractérisée en ce que** l'axe de pivotement (24) ou un axe parallèle à celui-ci sert d'arête de basculement (35), par le biais de laquelle le rouleau de bande de matière (22) peut être basculé du poste de stockage (21) au poste de déroulement (16).

3. Presse à balles rondes selon la revendication 1 ou 2, **caractérisée en ce que** le dispositif de chargement (20) comprend un élément porteur pour au moins un rouleau de bande de matière (22), dont la section s'élargit vers l'ouverture d'introduction (23).

4. Presse à balles rondes selon l'une quelconque des revendications 1 à 3, **caractérisée en ce que** l'ouverture d'introduction (23) est conçue en forme d'anneau de cercle ou au moins de demi-cercle et présente un rayon qui est supérieur au rayon maximal d'un rouleau de bande de matière (22).

5. Presse à balles rondes selon les revendications 3 et 4, **caractérisée en ce que** l'élément porteur se compose de tubes (25, 26) décalés dans le sens périphérique à distance, qui sont réalisés coudés ou pliés vers l'ouverture d'introduction (23) selon le rayon supérieur de l'ouverture d'introduction (23).

6. Presse à balles rondes selon l'une ou plusieurs quelconques des revendications précédentes, **caractérisée en ce que** le poste de déroulement (16) présente un support de rouleau de bande de matière (37) avec deux éléments récepteurs (38, 39) logés coaxialement, espacés l'un de l'autre pour un rouleau de bande de matière (16).

7. Presse à balles rondes selon la revendication 6, **caractérisée en ce que** la distance axiale entre les éléments récepteurs (38, 39) peut être modifiée au moyen d'un dispositif de réglage (40) pour le centrage et le serrage à bloc détachable du rouleau de bande de matière (16).

8. Presse à balles rondes selon la revendication 7, **caractérisée en ce qu'**au moins un élément récepteur (38) peut être relié de manière bloquée en rotation à un rouleau de bande de matière (16) en vue de transmettre une force de freinage.

9. Presse à balles rondes selon la revendication 7 et l'une ou plusieurs quelconques des revendications précédentes, **caractérisée en ce que** le dispositif de chargement (20) et/ou le dispositif de réglage (40) peuvent/peut être actionné(s) manuellement ou par une force extérieure.

10. Presse à balles rondes selon l'une ou plusieurs quelconques des revendications précédentes, **caractérisée en ce que** le dispositif de chargement (20) et/ou le dispositif de réglage (40) sont/est commandé(s) au moyen d'une unité de transmission de signaux manuelle ou sensorielle.
